# EUROPÄISCHE PATENTSCHRIFT

(11) **EP 0 616 928 B1**
(45) Veröffentlichungstag und Bekanntmachung des Hinweises auf die Patenterteilung: **11.12.1996**
(21) Anmeldenummer: 94103196.5
(22) Anmeldetag: 03.03.1994
(51) Int. Cl.: B60R 22/46

(54) **Gurtstraffer mit pyrotechnischem Gasgenerator**
Belt tensioner with pyrotechnic gas generator
Tendeur de sangle pour ceintures de sécurité avec moteur pyrotechnique

(30) Priorität: 20.03.1993 DE 9304152 U
(43) Veröffentlichungstag der Anmeldung: 28.09.1994
(73) Patentinhaber: TRW Occupant Restraint Systems GmbH, 73553 Alfdorf (DE)
(72) Erfinder: Bläse, Meinhard, D-73557 Mutlangen (DE); Mika, Helmut, D-73550 Waldstetten (DE)
(74) Vertreter: Degwert, Hartmut, Dipl.-Phys.

(56) Entgegenhaltungen:
- EP-A- 0 558 963
- DE-U- 8 406 217
- FR-A- 2 491 340
- GB-A- 2 217 181

## Beschreibung

Die Erfindung betrifft einen Gurtstraffer mit einem pyrotechnischen Gasgenerator und einer durch die von diesem erzeugten Gase aktivierbaren Kolben/Zylinder-Einheit, an deren Kolben ein Zugseil angeschlossen ist, wobei der Kolben aus einem ersten, fest mit dem Zugseil verbundenen metallischen Kolbenteil und wenigstens einem zweiten Kolbenteil aus Kunststoffmaterial gebildet ist, wovon wenigstens ein Abschnitt auf der dem Gasgenerator zugewandten Seite des ersten Kolbenteils angeordnet ist und mit der Zylinderwandung in Dichtungseingriff steht.

Ein solcher Gurtstraffer ist aus der GB-A-2 217 181 bekannt. Der von dem pyrotechnischen Gasgenerator nach Aktivierung durch eine Sensoreinheit innerhalb von Millisekunden erzeugte Gasdruck setzt den Kolben und das mit ihm verbundene Zugseil zu Beginn des Straffervorgangs hohen Belastungen aus. Der vom Gasgenerator erzeugte hohe Gasdruck beaufschlagt den Kolben und beschleunigt diesen in Richtung auf eine Kolbenfangsicherung, wodurch das Zugseil schlagartig in Richtung auf die Kolbenfangsicherung gezogen wird. Beim Straffervorgang wirken also sowohl auf den Kolben als auch auf das Zugseil hohe Kräfte ein.

Die Hauptfunktionen eines Kolbens in einer Kolben/Zylinder-Einheit eines Gurtstraffers werden im folgenden kurz erläutert. Die wichtigste Funktion ist naturgemäß die Umsetzung der durch den im Gasgenerator erzeugten Gasdruck auf den Kolben einwirkenden Druckkraft in eine Zugkraft im Zugseil, die zur Straffung des Sicherheitsgurtes verwendet wird. Für die Kraftübertragung vom Kolben auf das Zugseil ist eine hohe mechanische Festigkeit insbesondere am Übergang Kolben/Zugseil notwendig.

Eine zweite wichtige Funktion des Kolbens besteht in dem Ausbilden einer Dichtung zwischen ihm und der Zylinderwandung, um den vom Gasgenerator bereitgestellten Druck ohne große Verluste in eine Kolbenbewegung umzusetzen.

Eine dritte wichtige Funktion des Kolbens besteht in dem Ausbilden einer Dämpfung zwischen dem Kolben und dem Zugseil, da bei leistungsstarken Gasgeneratoren aufgrund des sich zu Beginn des Straffervorgangs sehr schnell aufbauenden Drucks im Zylinder der Kolben/Zylinder-Einheit enorme Beschleunigungen des Kolbens auftreten, die zu Belastungsspitzen im Zugseil und im an das Zugseil angeschlossenen Gurtstraffer führen. Um dennoch die Betriebssicherheit des Gurtstraffers zu gewährleisten, müssen seine diesen Belastungsspitzen ausgesetzten Bauteile im Hinblick auf diese Spitzenlast anstatt im Hinblick auf die eigentliche Betriebslast dimensioniert werden, die geringer als die Spitzenlast ist.

Aus der eingangs genannten GB-A-2 217 181 ist bekannt, daß mit einem zweiteiligen Kolben diese Anforderungen an einen Gurtstraffer erfüllt werden können. Das primär die Krafteinleitung in das Zugseil bewirkende erste Kolbenteil besteht vorzugsweise aus einem Stahlwerkstoff, wodurch es bei geringem Materialeinsatz eine ausreichende Festigkeit aufweist. Das primär die Dämpfungsfunktion und die Dichtigkeit ausbildende und spezifisch geringer belastete zweite Kolbenteil besteht aus einem leichter formbaren Material, mit dem die zur Erzielung der beschriebenen Funktionen notwendigen Ausgestaltungen kostengünstig ausgebildet werden können.

Ähnlich hohe Belastungen wie nach einer Aktivierung durch eine Sensoreinheit können auf einen Gurtstraffer im Falle einer anwendungsfremden Wärmeeinwirkung einwirken, wenn durch die zugeführte Energie eine Fehlauslösung des Gasgenerators provoziert wird. Dies ist der Fall z.B. bei einem Fahrzeugbrand oder bei einem diesen simulierenden Bon-Fire-Test.

Es ist Aufgabe der Erfindung, einen Gurtstraffer der eingangs genannten Art zu schaffen, der bei einer anwendungsfremden Zündung des Gasgenerators, z.B. im Falle eines Fahrzeugbrandes, nicht explodieren bzw. sich in schärfkantige oder schwere Wurfstücke zerlegen kann.

Diese Aufgabe wird bei einem Gurtstraffer der eingangs genannten Art dadurch gelöst, daß das Kunststoffmaterial des zweiten Kolbenteils ein thermoplastischer Kunststoff ist, der sich bei übermäßiger Erwärmung verformt, so daß der Dichtungseingriff wenigstens partiell aufgehoben wird und ein Durchgang von der dem Gasgenerator zugewandten Seite des Kolbens auf die vom Gasgenerator abgewandten Seite des Kolbens freigegeben ist. Durch diese Ausführung des Kolbens lassen sich zwei an sich widersprüchliche Funktionen des Kolben erzielen: Zum einen ergibt sich beim normalen Betrieb eine sichere Abdichtung zwischen dem zweiten Kolbenteil und der Wandung des Zylinders, so daß der vom Gasgenerator beim Straffvorgang erzeugte Gasdruck im wesentlichen verlustfrei auf den Kolben einwirken kann. Zum anderen ergibt sich bei einer betriebsfremden Zündung des Gasgenerators bei einer übermäßigen Erwärmung des Gurtstraffers, beispielsweise bei einem Fahrzeugbrand, eine Verformung des thermoplastischen Kunststoffs des zweiten Kolbenteils, wodurch ein Durchgang durch das zweite Kolbenteil bzw. am zweiten Kolbenteil vorbei entsteht. Das Gas passiert somit zunächst den aufgrund elastischer Verformung entstandenen Durchgang am zweiten Kolbenteil und (abhängig von der Anordnung des ersten bezüglich des zweiten Kolbenteils) eventuell anschließend das wärmebeständige, aber keine Dichtung aufweisende erste Kolbenteil. Auf diese Weise kann das Gas aus dem bei der Kolbenfangsicherung offenen Ende der Kolben/Zylinder-Einheit entweichen, wodurch eine Explosion der Einheit bei Wärmeeinwirkung vermieden wird.

Vorteilhafte Weiterbildungen der Erfindung sind in den Unteransprüchen gegeben.

Weitere Merkmale und Vorteile der Erfindung ergeben sich aus der folgenden Beschreibung und aus den Zeichnungen, auf die Bezug genommen wird. In den Zeichnungen zeigen:
Fig. 1 einen Teilquerschnitt durch einen Zylinder mit einem Kolben gemäß einer ersten Ausführungsform der Erfindung;
Fig. 2 einen Teilquerschnitt durch einen Zylinder und das zweite Kolbenteil mit dem ersten Kolbenteil gemäß einer weiteren Ausführungsform der Erfindung;
Fig. 3 einen Querschnitt durch das erste und das zweite Kolbenteil gemäß einer weiteren Ausführungsform der Erfindung;
Fig. 4 einen Querschnitt durch das erste und das zweite Kolbenteil von Fig. 3;
Fig. 5 einen Teilquerschnitt durch das zweite Kolbenteil gemäß einer weiteren Ausführungsform der Erfindung;
Fig. 6 eine Teilseitenansicht des zweiten Kolbenteils gemäß einer weiteren Ausführungsform der Erfindung; und
Fig. 7 einen Teilquerschnitt durch das zweite Kolbenteil gemäß einer weiteren Ausführungsform der Erfindung.

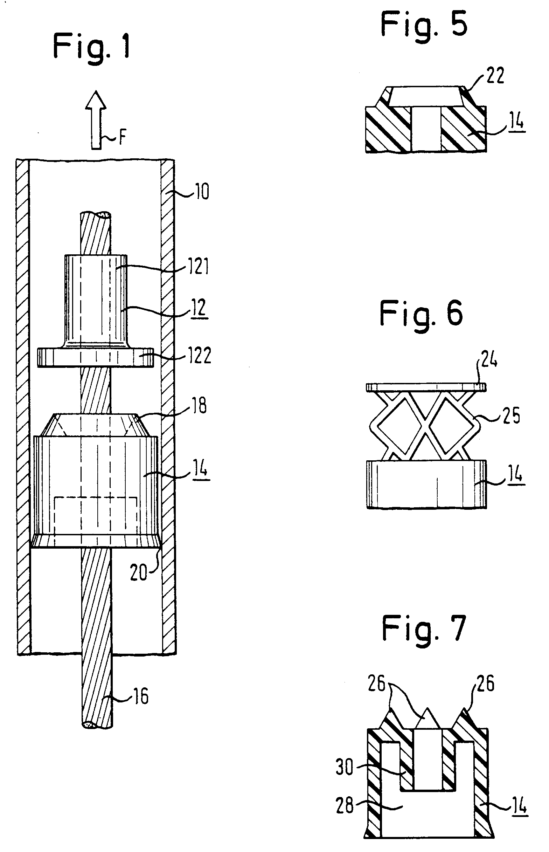

Fig. 1 zeigt einen Querschnitt durch einen Zylinder 10 eines Gurtstraffers mit einem ersten Kolbenteil 12 und einem zweiten Kolbenteil 14 gemäß einer ersten Ausführungsform der Erfindung. Das erste Kolbenteil 12 besteht aus einem Stahlwerkstoff und ist mit einem Zugseil 16 verpreßt. Das Zugseil ist in bekannter Weise mit einem hier nicht dargestellten Gurtaufroller verbunden. Das erste Kolbenteil 12 besteht aus einer das Zugseil 16 umgebenden Hülse 121, an der sich auf der dem zweiten Kolbenteil 14 zugewandten Seite eine sich im wesentlichen quer zum Zugseil 16 erstreckende Anschlagplatte 122 anschließt. Die Hülse 121 und die Anschlagplatte 122 sind einstückig ausgebildet und bilden das erste Kolbenteil 12.

Das zweite Kolbenteil 14 ist von im wesentlichen zylindrischer Gestalt und weist einen größeren Durchmesser auf als das erste Kolbenteil 12. Dieses besitzt einen Durchgang für das Zugseil 16 sowie auf seiner dem ersten Kolbenteil 12 zugewandten Stirnseite eine ringförmige, zum ersten Kolbenteil 12 konzentrisch verlaufende Erhebung 18.

Das zweite Kolbenteil 14 ist vom ersten Kolbenteil 12 beabstandet angeordnet und in seinem dem hier nicht dargestellten Gasgenerator zugewandten Endabschnitt kegelförmig zur diesen Endabschnitt abschließenden Stirnseite hin so verbreitert, daß der Bereich mit dem größten Durchmesser des zweiten Kolbenteils 14 am Zylinder 10 anliegt. Durch diese Ausgestaltung ist eine Dichtlippe 20 gebildet, die ein Hindurchtreten von Gas von der dem Gasgenerator zugewandten Seite des zweiten Kolbenteils 14 auf die dem ersten Kolbenteil 12 zugewandten Seite verhindert.

Das zweite Kolbenteil 14 ist verschiebbar auf dem Zugseil 16 angeordnet. Auf diese Weise beaufschlagt der beim Zünden des Gasgenerators für den Gurtstraffervorgang entstehende Gasdruck zuerst das zweite Kolbenteil 14. Dadurch wird dieses in Richtung des Pfeils F auf das erste Kolbenteil 12 beschleunigt. Die ringförmige Erhebung 18 wirkt beim Auftreffen auf die Anschlagplatte 122 des ersten Kolbenteils 12 als Dämpfungsmittel, indem sie sich infolge des Aufpralls auf die Anschlagplatte 122 des ersten Kolbenteils 12 plastisch verformt. Ferner gibt der weitere Bereich des zweiten Kolbenteils 14 elastisch nach. Dadurch vermindert sich die maximale Krafteinwirkung auf das erste Kolbenteil 12 und somit auf das Zugseil 16, so daß Belastungsspitzen beim Straffervorgang abgebaut und eine ruckartige Straffung des Zugseils vermieden wird. Aufgrund der gedämpften Beschleunigung des ersten Kolbenteils 12 und des Zugseils 16 können sowohl das Zugseil 16 als auch der Kolben schwächer dimensioniert ausgebildet werden.

Da das zweite Kolbenteil aus einem thermoplastischen Werkstoff besteht, wird seine an der Innenwand des Zylinders 10 anliegende Dichtlippe 20 von dieser gelöst, wenn der thermoplastische Werkstoff durch Wärmeeinwirkung, z.B. bei einem Fahrzeugbrand, erwärmt wird. Das eventuell durch eine Fehlzündung erzeugte Gas kann dann zunächst das zweite Kolbenteil und anschließend das erste Kolbenteil 12 passieren und durch die geöffnete Kolbenfangsicherung entweichen, wodurch die Explosionsgefahr in einfacher Weise ausgeräumt ist.

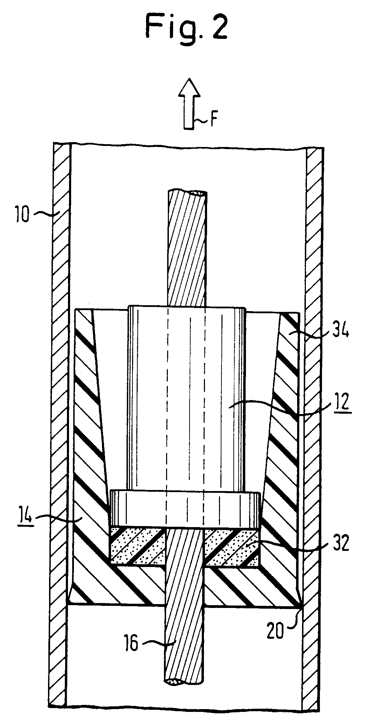

Eine weitere Ausführungsform des Kolbens gemäß der Erfindung ist in Fig. 2 dargestellt. Bauteile dieser Figur mit einer gleichen Funktion wie Bauteile von Fig. 1 tragen die gleichen Bezugszeichen.

Das zweite Kolbenteil 14 dieser Ausführungsform ist hierbei hohlzylindrisch ausgebildet. Das erste Kolbenteil 12 ist im zweiten Kolbenteil 14 angeordnet und so dimensioniert, daß der Außendurchmesser der Anschlagplatte des ersten Kolbenteils 12 kleiner oder gleich dem Innendurchmesser der Aufnahme für das erste Kolbenteil 12 im zweiten Kolbenteil 14 ist. Zwischen dem ersten Kolbenteil 12 und dem zweiten Kolbenteil 14 ist als Dämpfungsmittel eine Elastomerplatte 32 angeordnet. Das erste Kolbenteil 12, das zweite Kolbenteil 14 sowie die Elastomerplatte 32 sind aufeinanderliegend angeordnet. Es kann jedoch auch eine Beabstandung vorgesehen sein.

Auch hier besitzt das zweite Kolbenteil 14 eine Dichtlippe 20, wie sie bereits bezüglich Fig. 1 beschrieben wurde und die sich in der oben beschriebenen Art und Weise bei Erwärmung von der Anlage an der Zylinderinnenwand löst.

Die Seitenwandung 34 des zweiten Kolbenteils 14 verjüngt sich zur hier nicht dargestellten Kolbenfangsicherung des Gurtstraffers hin. Das zweite Kolbenteil 14 ist auf der dem Gasgenerator zugewandten Seite des ersten Kolbenteils 12 angeordnet. Durch die Verjüngung der Seitenwände des zweiten Kolbenteils 14 wird zusätzlicher Raum seitlich zwischen dem ersten Kolbenteil 12 und dem zweiten Kolbenteil 14 geschaffen. Dies hat den Vorteil, daß der thermoplastische Werkstoff des zweiten Kolbenteils 14 bei einer Erwärmung, beispielsweise bei einem Fahrzeugbrand, und unter der Wirkung des bei einer Fehlzündung erzeugten Gasdrucks einwärts bewegt wird und daß das erzeugte Gas das zweite Kolbenteil 14 leichter passieren kann. Auch hier entweicht das Gas über die offenen Kolbenfangsicherung, wodurch die Explosionsgefahr ausgeräumt ist.

Bei dieser Ausführungsform übernimmt eine zwischen das erste Kolbenteil 12 und das zweite Kolbenteil 14 eingesetzte Elastomerplatte 32 die bezüglich Fig. 1 beschriebene Dämpfungsfunktion, um Belastungsspitzen auf das erste Kolbenteil 12 beim Straffervorgang zu vermindern.

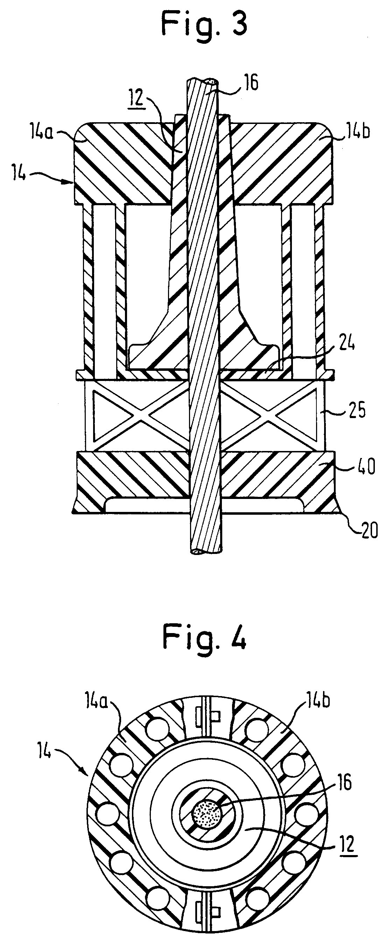

In Fig. 3 ist eine weitere Ausführungsform der Erfindung dargestellt, die eine kostengünstige Fertigung insbesondere des zweiten Kolbenteils 14 ermöglicht. Gemäß dieser Ausführungsform ist das zweite Kolbenteil 14 längsgeteilt in zwei Teilstücke 14a, 14b ausgebildet. Es besteht vorzugsweise aus zwei Hälften, die bezüglich einer durch die Mittelachse des Zugseils 16 laufenden Ebene im wesentlichen symmetrisch sind. Bei der Montage können diese Hälften nach Aufpressen des Kolbenteils 12 auf das Zugseil 16 um das Kolbenteil 12 auf das Zugseil 16 aufgeklipst werden, so daß das erste Kolbenteil 12 und das zweite Kolbenteil 14 ein Einheit bilden. Auch hier sind an dem zweiten Kolbenteil 14 dieser Ausführungsform eine Dichtlippe 20 sowie Dämpfungsmittel vorgesehen, die die gleichen Funktionen wie bezüglich Fig. 1 und Fig. 2 beschrieben besitzen. In dieser Ausführungsform sind die Dämpfungsmittel als verformbares Stabwerk 25 ausgebildet, das zwischen einer mit der Dichtlippe 20 versehenen Stirnplatte 40 des zweiten Kolbenteils 14 und einer Anschlagplatte 24 für das erste Kolbenteil 12 angeordnet ist.

Fig. 4 zeigt einen Querschnitt durch das erste Kolbenteil 12 und das zweite Kolbenteil 14. Deutlich erkennbar ist die Ausgestaltung des zweiten Kolbenteils in zwei im wesentlichen symmetrischen Hälften 14a und 14b.

In den Figuren 5 bis 7 sind weitere Ausführungsformen des zweiten Kolbenteils 14 dargestellt, die insbesondere in Verbindung mit der in Fig. 1 dargestellten Ausführungsform verwendet werden können.

In Fig. 5 ist der obere Bereich des zweiten Kolbenteils 14 dargestellt, das auf der dem ersten Kolbenteil 12 zugewandten Seite eine ringförmige Erhebung 22 ähnlich der Erhebung 18 von Fig. 1 aufweist. Im Gegensatz zur Ausführung von Fig. 1 ist diese ringförmige Erhebung 22 auf der Ringinnenseite hinterschnitten ausgebildet. Für den Durchgang des Zugseils 16 ist in der Mitte des Kolbenteils 14 dieser und der folgenden Ausführungen ein Durchgang ausgebildet.

In Fig. 6 ist die Anschlagplatte 24 für das erste Kolbenteil 12 dargestellt, die über ein Stabwerk 25 mit der dem ersten Kolbenteil 12 zugewandten Stirnseite des zweiten Kolbenteils 14 verbunden ist.

In Fig. 7 ist ein hohlzylindrisch ausgebildetes zweites Kolbenteil 14 dargestellt, an dessen dem ersten Kolbenteil 12 zugewandten Stirnseite einzelne, kegelförmige Erhebungen 26 angeformt sind. Konzentrisch zum zweiten Kolbenteil 14 ist eine in eine Aussparung 28 des zweiten Kolbenteils 14 ragende Hülse 30 innen an der Stirnwand des zweiten Kolbenteils 14 angeformt.

Alle in den Figuren 5 bis 7 dargestellten Ausführungsformen gemäß der Erfindung des in bezug auf die Bewegungsrichtung des zweiten Kolbenteils 14 beim Straffervorgang vorderen Bereichs des zweiten Kolbenteils 14 dienen als Dämpfungsmittel für den Aufprall des zweiten Kolbenteils 14 auf das erste Kolbenteil 12 beim Straffervorgang. Dabei dämpft die Ausgestaltung der Ausbildungsform von Fig. 5 den Aufprall des zweiten Kolbenteils 14 durch elastische und plastische Verformung, indem zunächst die ringförmige Erhebung 22 plastisch verformt wird und anschließend der weitere Bereich des Kolbenteils 14 elastisch nachgibt. Die Ausführungsform von Fig. 6 dämpft den Aufprall durch elastisches Nachgeben des Stabwerks 25, und die Ausführungsform von Fig. 7 dämpft den Aufprall des zweiten Kolbenteils 14 auf das erste Kolbenteil 12 im wesentlichen durch plastische Verformung des vorderen Bereichs des zweiten Kolbenteils 14 in die Aussparung 28 hinein.

Als thermoplastischer Werkstoff für das zweite Kolbenelement 14 kann bei allen Ausführungsformen Polypropylen sowie Polyamid oder Polyformaldehyd verwendet werden.

## Patentansprüche

1. Gurtstraffer mit einem pyrotechnischen Gasgenerator und einer durch die von diesem erzeugten Gase aktivierbaren Kolben/Zylinder-Einheit, an deren Kolben (12, 14) ein Zugseil (16) angeschlossen ist, wobei der Kolben aus einem ersten, fest mit dem Zugseil (16) verbundenen metallischen Kolbenteil (12) und wenigstens einem zweiten Kolbenteil (14) aus Kunststoffmaterial gebildet ist, wovon wenigstens ein Abschnitt auf der dem Gasgenerator zugewandten Seite des ersten Kolbenteils (12) angeordnet ist und mit der Zylinderwandung in Dichtungseingriff steht, dadurch gekennzeichnet, daß das Kunststoffmaterial des zweiten Kolbenteils (14) ein thermoplastischer Kunststoff ist, der sich bei übermäßiger Erwärmung, z.B bei einem Fahrzeugbrand, verformt so daß der Dichtungseingriff wenigstens partiell aufgehoben wird und ein Durchgang von der dem Gasgenerator zugewandten Seite des Kolbens (12, 14) auf die vom Gasgenerator abgewandten Seite des Kolbens freigegeben ist.

2. Gurtstraffer nach Anspruch 1, dadurch gekennzeichnet, daß das zweite Kolbenteil (14) vom ersten Kolbenteil (12) axial beabstandet und auf dem Zugseil (16) verschiebbar angeordnet ist.

3. Gurtstraffer nach Anspruch 1 oder 2, dadurch gekennzeichnet, daß zwischen dem ersten Kolbenteil (12) und dem zweiten Kolbenteil (14) Dämpfungsmittel (18; 22; 24, 25; 26, 28, 30; 32) vorgesehen sind, die unter Krafteinwirkung elastisch und/oder plastisch verformbar ausgebildet sind.

4. Gurtstraffer nach Anspruch 3, dadurch gekennzeichnet, daß eine Elastomerplatte (32) das Dämpfungsmittel bildet.

5. Gurtstraffer nach Anspruch 3, dadurch gekennzeichnet, daß die Dämpfungsmittel (18; 22; 24, 25; 26, 28, 30) an dem ersten und/oder dem zweiten Kolbenteil (12, 14) angeformt sind.

6. Gurtstraffer nach Anspruch 3, dadurch gekennzeichnet, daß Erhebungen (18; 22; 24, 25; 26) und/oder Vertiefungen, die an dem ersten Kolbenteil (12) und/oder dem zweiten Kolbenteil (14) ausgebildet sind, die Dämpfungsmittel bilden.

7. Gurtstraffer nach einem der vorhergehenden Ansprüche, dadurch gekennzeichnet, daß das erste Kolbenteil (12) einen geringeren Außendurchmesser als das zweite Kolbenteil (14) aufweist.

8. Gurtstraffer nach Anspruch 7, dadurch gekennzeichnet, daß das zweite Kolbenteil (14) hohlzylindrisch und in Richtung auf das erste Kolbenteil (12) offen ausgebildet ist.

9. Gurtstraffer nach Anspruch 8, dadurch gekennzeichnet, daß das erste Kolbenteil (12) zumindest teilweise innerhalb des zweiten Kolbenteils (14) angeordnet ist.

10. Gurtstraffer nach Anspruch 9, dadurch gekennzeichnet, daß die Seitenwandung (34) des zweiten Kolbenteils (14) sich zu der vom Gasgenerator abgewandten Seite verjüngt.

11. Gurtstraffer nach einem der vorhergehenden Ansprüche, dadurch gekennzeichnet, daß das zweite Kolbenteil (14) eine Dichtung (20) zum Abdichten zwischen dem zweiten Kolbenteil und der Innenseite des Zylinders (10) aufweist.

12. Gurtstraffer nach Anspruch 11, dadurch gekennzeichnet, daß eine am zweiten Kolbenteil (14) angeformte Dichtlippe (20) die Dichtung bildet.

13. Gurtstraffer nach Anspruch 12, dadurch gekennzeichnet, daß die Dichtlippe (20) auf der dem Gasgenerator zugewandten Seite des zweiten Kolbenteils (14) angeordnet ist.

14. Gurtstraffer nach einem der vorhergehenden Ansprüche, dadurch gekennzeichnet, daß das zweite Kolbenteil (14) in zwei Teilstücke (14a, 14b) längsgeteilt ist.

15. Gurtstraffer nach Anspruch 14, dadurch gekennzeichnet, daß die zwei Teilstücke (14a, 14b) des zweiten Kolbenteils (14) um das erste Kolbenteil (12) zusammengesetzt sind.

16. Gurtstraffer nach einem der vorhergehenden Ansprüche, dadurch gekennzeichnet, daß das zweite Kolbenteil (14) aus Polypropylen, Polyamid oder Polyformaldehyd besteht.

## Claims

1. A belt pretensioner comprising a pyrotechnic gas generator and a piston and cylinder unit which is adapted to be activated by the gases generated by the gas generator and whose piston (12, 14) is connected with a cable (16), the piston comprising a first metal piston part (12) fixedly connected with the cable (16) and at least a second piston part (14) of plastic material, at least a section of the second piston part being arranged on the side of the first piston part (12) which faces the gas generator and being in tight engagement with the cylinder wall, characterized in that the plastic material of the second piston part (14) is a thermoplastic material which, when excessively heated, e.g. in case of a vehicle fire, is deformed in a manner as to cancel the tight engagement at least partially and to open a passage from the side of the piston (12, 14) facing the gas generator to the side of the piston facing away from the gas generator.

2. The belt pretensioner as claimed in claim 1, characterized in that the second piston part (14) is spaced from the first piston part (12) and arranged displaceably on the cable (16).

3. The belt pretensioner as claimed in claim 1 or 2, characterized in that between the first and second piston parts (12, 14) damping means (18; 22; 24, 25; 26, 28, 30; 32) are provided which are designed to yield elastically and/or plastically under the action of a force.

4. The belt pretensioner as claimed in claim 3, characterized in that the damping means is constituted by an elastomer plate (32).

5. The belt pretensioner as claimed in claim 3, characterized in that the means (18; 22; 24, 25; 26, 28, 30) are molded on the first and/or on the second piston part (12, 14).

6. The belt pretensioner as claimed in claim 3, characterized in that the damping means are constituted by raised portions (18; 22; 24, 25; 26) and/or recesses on the first and/or the second piston part (12, 14).

7. The belt pretensioner as claimed in any one of the preceding claims, characterized in that the first piston part (12) has a smaller external diameter than the second piston part (14).

8. The belt pretensioner as claimed in claim 7, characterized in that the second piston part (14) is shaped as a hollow cylinder and open towards the first piston part (12).

9. The belt pretensioner as claimed in claim 8, characterized in that the first piston part (12) is arranged at least partly in the interior of the second piston part (14).

10. The belt pretensioner as claimed in claim 9, characterized in that the lateral wall (34) of the second piston part (14) tapers on the side facing away from the gas generator.

11. The belt pretensioner as claimed in any one of the preceding claims, characterized in that the second piston part (14) has a seal (20) providing a sealing action between the second piston part and the inner side of the cylinder (10).

12. The belt pretensioner as claimed in claim 11, characterized in that a sealing lip (20) molded on the second piston part (14) constitutes said seal.

13. The belt pretensioner as claimed in claim 12, characterized in that the sealing lip (20) is arranged on the side of the second piston part (14) facing the gas generator.

14. The belt pretensioner as claimed in any of the preceding claims, characterized in that the second piston part (14) is longitudinally divided into two sections (14a, 14b).

15. The belt pretensioner as claimed in claim 14, characterized in that the two sections (14a, 14b) of the second piston part (14) are assembled around the first piston part (12).

16. The belt pretensioner as claimed in any one of the preceding claims, characterized in that the second piston part (14) comprises polypropylene, polyamide or polyformaldehyde.

## Revendications

1. Tendeur de ceinture comportant un générateur pyrotechnique de gaz et une unité à piston/cylindre pouvant être activée par les gaz produits par celui-ci, un câble de traction (16) étant raccordé au piston (12, 14) de l'unité, le piston étant constitué d'une partie de piston métallique (12) rigidement reliée au câble de traction (16), et d'au moins une seconde partie de piston (14) réalisée en une matière plastique, dont une portion au moins est placée du côté de la première partie de piston (12), qui est orienté vers le générateur de gaz, et étant en contact étanche avec la paroi du cylindre, caractérisé en ce que la matière plastique de la seconde partie de piston (14) est une matière thermoplastique qui se déforme en cas de chauffage excessif, par exemple en cas d'incendie du véhicule, de manière à supprimer au moins partiellement l'engagement étanche et à libérer un passage des gaz du côté du piston (12, 14) orienté face au générateur de gaz vers le côté situé à l'opposé du générateur de gaz.

2. Tendeur de ceinture selon la revendication 1, caractérisé en ce que la seconde partie (14) du piston est espacée axialement de la première partie (12) et peut coulisser sur le câble de traction (16).

3. Tendeur de ceinture selon la revendication 1 ou 2, caractérisé en ce qu'entre la première partie (12) et la seconde partie (14) du piston sont prévus des moyens d'amortissement (18 ; 22 ; 24, 25 ; 26, 28, 30 ; 32) qui peuvent être déformés élastiquement et/ou plastiquement, sous l'effet d'une force.

4. Tendeur de ceinture selon la revendication 3, caractérisé en ce qu'une plaque en élastomère (32) forme le moyen d'amortissement.

5. Tendeur de ceinture selon la revendication 3, caractérisé en ce que les moyens d'amortissement (18 ; 22 ; 24, 25 ; 26, 28, 30) sont formés sur la première et/ou la seconde partie (12, 14) du piston.

6. Tendeur de ceinture selon la revendication 3, caractérisé en ce que des reliefs (18 ; 22 ; 24, 25 ; 26) et/ou des creux, qui sont formés sur la première partie (12) et/ou la seconde partie (14) du piston, constituent les moyens d'amortissement.

7. Tendeur de ceinture selon l'une des revendications précédentes, caractérisé en ce que la première partie (12) du piston présente un diamètre extérieur inférieur à la seconde partie (14) du piston.

8. Tendeur de ceinture selon la revendication 7, caractérisé en ce que la seconde partie (14) du piston est cylindrique creuse et est ouverte en direction de la première partie (12).

9. Tendeur de ceinture selon la revendication 8, caractérisé en ce que la première partie (12) du piston est prévue au moins partiellement à l'intérieur de la seconde partie (14).

10. Tendeur de ceinture selon la revendication 9, caractérisé en ce que la paroi latérale (34) de la seconde partie (14) se rétrécit vers le côté tourné à l'opposé du générateur de gaz.

11. Tendeur de ceinture selon l'une des revendications précédentes, caractérisé en ce que la seconde partie (14) du piston présente une garniture d'étanchéité (20) destinée à assurer l'étanchéité entre la seconde partie du piston et le côté intérieur du cylindre (10).

12. Tendeur de ceinture selon la revendication 11, caractérisé en ce qu'une lèvre d'étanchéité (20), formée sur la seconde partie (14) du piston, constitue la garniture d'étanchéité.

13. Tendeur de ceinture selon la revendication 12, caractérisé en ce que la lèvre d'étanchéité (20) est prévue sur le côté tourné vers le générateur de gaz de la seconde partie (14) du piston.

14. Tendeur de ceinture selon l'une des revendications précédentes, caractérisé en ce que la seconde partie (14) du piston est partagée longitudinalement en deux morceaux (14a, 14b).

15. Tendeur de ceinture selon la revendication 14, caractérisé en ce que les deux morceaux (14a, 14b) de la seconde partie (14) du piston sont assemblés autour de la première partie (12) du piston.

16. Tendeur de ceinture selon l'une des revendications précédentes, caractérisé en ce que la seconde partie (14) du piston est en polypropylène, polyamide ou polyformaldéhyde.
